# EUROPEAN PATENT APPLICATION

(11) **EP 1 096 818 A1**
(43) Date of publication of application: **02.05.2001**
(21) Application number: 99121607.8
(22) Date of filing: 29.10.1999
(51) Int. Cl.: H04Q 7/30, H04B 7/08

(54) **Base station with a first and a second base unit**

(71) Applicant: TELEFONAKTIEBOLAGET LM ERICSSON (publ), 126 25 Stockholm (SE)
(72) Inventor: Jeck, Michael, 90482 Nürnberg (DE); Keller, Harald, 90552 Röthenbach (DE); Unshelm, Thomas, 92259 Neukirchen b.S.R. (DE)
(74) Representative: Mohsler, Gabriele

(57) **Abstract**

A base station with a first and a second base unit is described. Each base unit comprises an antenna system for transmitting and receiving radio signals, a transmitter part, for processing signals for the transmission by the antenna system, a first receiver part for processing signals received by the antenna system, a splitter for splitting signals received by the antenna system and a second receiver part connected to the splitter of the other base unit, for processing signals received by the antenna system of the other base unit. The signals processed by the first receiver part and the signals processed by the second receiver part provide diversity reception. The transmitter part of the first base unit includes at least two transmitters for transmitting signals of a first specification and a combiner for combining the signals of the transmitters to the antenna part of the first base unit and the transmitter part of the second base unit comprises a transmitter for transmitting signals of a second specification.

## Description

The present invention relates to a base station with a first and a second base unit. Particularly the invention relates to a base station, wherein each base unit comprises
- an antenna system for transmitting and receiving radio signals,
- a transmitter part, for processing signals for the transmission by the antenna system,
- a first receiver part for processing signals received by the antenna system,
- a splitter for splitting signals received by the antenna system,
- a second receiver part connected to the splitter of the other base unit, for processing signals received by the antenna system of the other base unit and ,
- wherein the signals processed by the first receiver part and the signals processed by the second receiver part provide diversity reception.

Today different mobile communication systems exist. In general a defined area is served by an operator with a so called cellular radio network system, where each cell is covered by a base station transmitting and receiving signals of defined standard taken from a group, comprising e.g. GSM900, GSM1800, GSM1900, PDC, ETACS. If an operator wants to provide additional traffic capacity or services to his subscribers, he has to add additional hardware to the existing hardware at a base station site. For example, if he wants to increase the traffic capacity in a standard specified by GSM to serve more users from a base station site he has to add additional transceivers or a new base station of the same standard beside the existing one. If he wants to provide new services in addition to the existing, like for example a new standard he has also to add normally a new base unit beside the existing one. But he has to regard some limitations when adding additional hardware to the existing hardware at a base station site. For example in some areas it is not allowed to add additional antenna systems on this base station site.

It is well known in the prior art that for increasing the traffic capacity in a GSM cellular radio network system a transmitter and receivers for an additional carrier signal are added to a base station site. As for example shown in W095/06367, this can be achieved by an arrangement, where a base station with one transmitter is connected to a two antenna system of an existing base station in such a way that no additional antenna on the base station site is necessary. Signals are transmitted without losing power by avoiding of a combiner in the transmission part. Therefore the signals transmitted from the additional transmitter are forwarded to the antenna of the existing base station, which was formerly used for reception only. The existing and the new transceivers are connected in such a way that the antenna system receives signals which are used for diversity reception. A limitation is that in cases when much more capacity is needed additional antennas are necessary to avoid combiners.

The patent document EP0566603B discloses a base station system with base stations for different types of mobile telephone systems like TACS, ETACS or GSM using existing antennas and antenna cables on a base station site for providing additional services to the subscribers. The disadvantage here is that additional filter means are necessary to lead the signals of all transmitters to one transmitter antenna. The resulting sharing of one antenna by several transmitted signals of different type has disadvantages like for example intermodulation or reduction in power. Also it is impossible to combine signals of different standard using different modulation techniques but with the same frequency range or overlapping frequency ranges.

It is an object of the invention to provide high traffic capacity for voice channels or simultaneously provide voice channels and data services by a base station It is also an object of the invention to avoid the disadvantages as described in the above state of the art. This is achieved by teaching of claim 1.
In claim 1 and throughout this text, a different signal specification denotes either a different frequency range or a different type of modulation or both.
According to claim 2 it is advantageous for achieving high traffic capacity and/or high capacity in data rate services to use a combiner for combining at least two transmitters both in the first base unit and in the second base unit.

Further advantageous embodiments are described in the claims 3 - 7.

According to claim 4 it is advantageous for increasing the traffic capacity to use a filter combiner to achieve high capacity per transmitting antenna with low loss combination of the signals from the transmitters.

According to claim 5 it is advantageous for achieving high capacity in data rates services and/or to allow full frequency hopping capability to use a hybrid combiner which has a low distortion of higher modulation techniques like 8PSK or 16QAM.

In the following the invention is further described according to the figures and by means of examples.
Fig.1: shows a base station with two connected base units
Fig.2a: shows a preferred embodiment of the invention
Fig.2b: shows the coverage of a base station providing high voice channel traffic and high data rate services
Fig.3: shows a second embodiment of the invention
Fig.4: shows a base station with one base unit, which can be upgraded according to the invention
Identically labeled elements appearing in different figures refer to the same element.

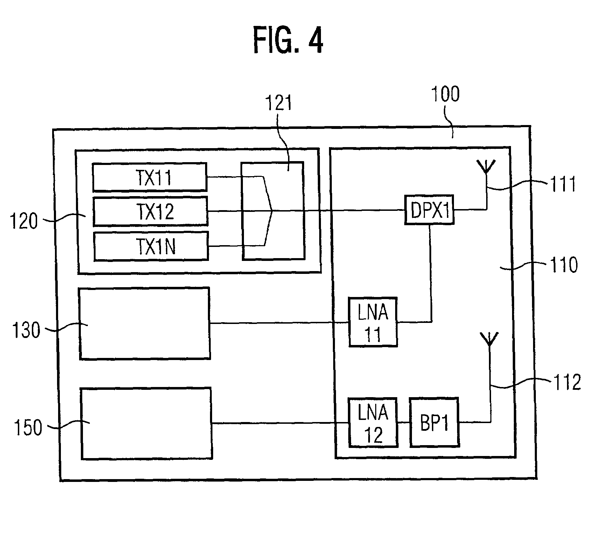

Existing second generation base stations within a digital cellular network, e.g. a GSM system, are developed to provide mainly voice channel functionality. The structure and operation of the system is described in M.Mouly & M-B Pautet, "The GSM system for Communications", Palaisean france , 1992. Fig.4 shows a typical state of the art base station specified in GSM900 with a base unit 100 for transmitting and receiving signals via an antenna system 110. In a transmitter part 120 several transmitters Tx11-Tx1N processing signals for transmission via a combiner 121 and a diplexer DPX1 to an antenna 111. The same antenna can be used to receive signals, passing the diplexer DPX1 only in direction to the receiver part 130 via an amplifier LNA11 and processed in the receiver part 130. Signals received by a second antenna 112 and transferred to a second receiver part 150 via a filter element BP1 and an amplifier LNA12 are also processed in that second receiver part 150 in such a way that together with the received signal by the first receiver part 130 both signals can be used for increasing the quality of receiving signals by a so called diversity reception.

GSM900 for example is specified with two frequency bands for transmitting and receiving close to 900 MHz and using a Gaussian-Minimum-Shift-Keying (GMSK) modulation. The available frequencies in both frequency bands are allocated to different base stations, each covering an defined area within a cellular network. The number of frequencies allocated to each base station define the available traffic capacity for voice channels of the cell. The maximum number of transmitters Txl11-Tx1N in the transmitter part 120 of the base station depends on the allocated frequencies within the area covered. If it is necessary to increase the traffic capacity to serve more users within the covered area additional transmitters are required . An easy way is to add a further base station to the existing one to cover the same area.

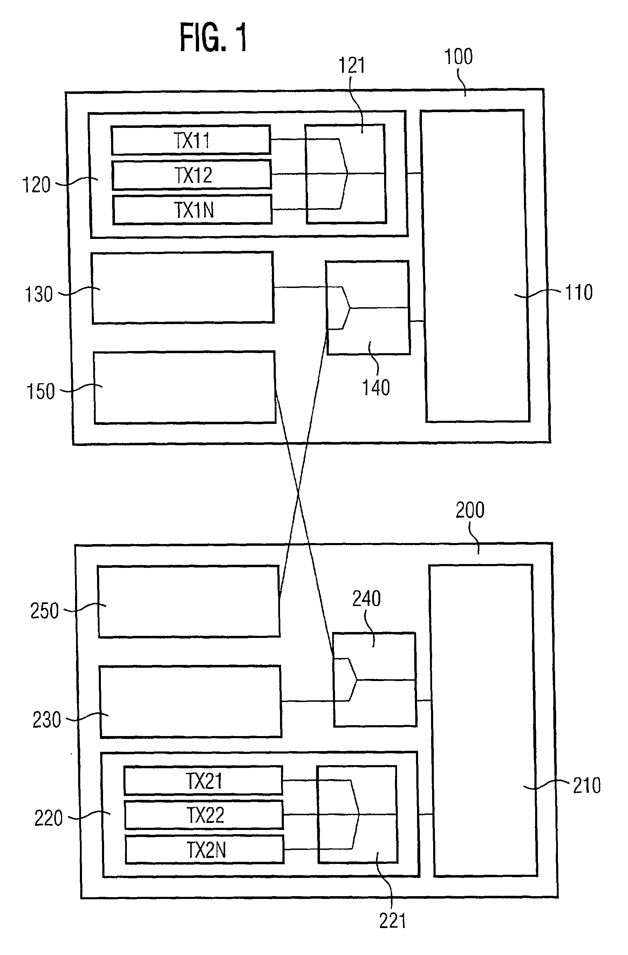

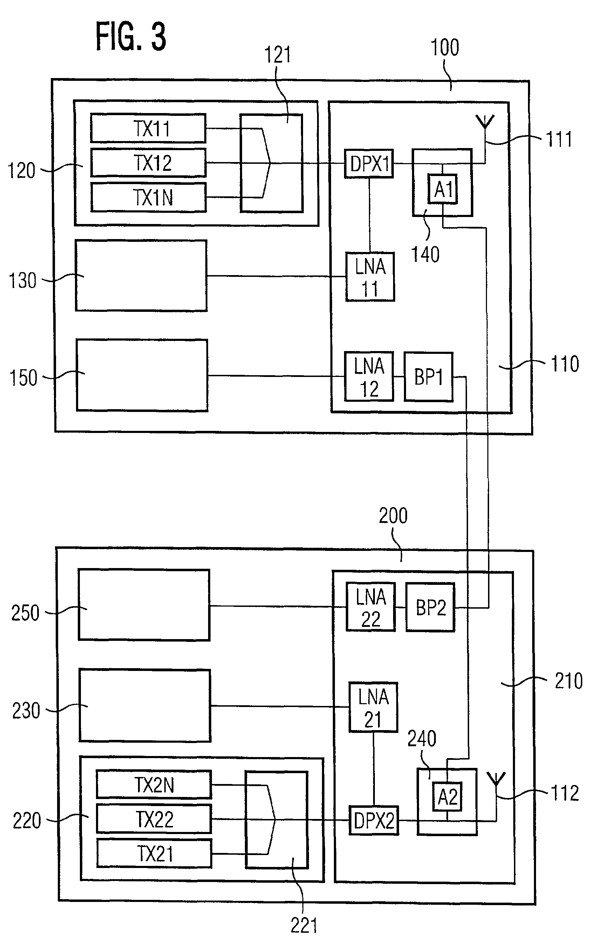

While adding transmitters transmitting signals of the same specification is limited by the available frequencies, one preferred embodiment of the present invention, as shown in Fig.1, is to add a separate base unit 200 to the existing base unit 100 for transceiving signals of different specification. For example a combination of two base units, one transceiving signals specified in GSM900 and the other on transceives in GSM1800 in or a combination of GSM1800 and UMTS can be used. The advantages are that the number of voice channels can be increased, because of use of frequencies from frequency bands from a different standard.
An additional base unit normally has its own antenna system which is added to the base station site. To avoid the necessity to add additional antenna systems on the base station site and limit the number of antennas, the existing antennas are used by both base units. A preferred embodiment of the invention to add additional voice channel capacity while using the same number of antennas is shown in Fig. 3. The first base unit 100 is used for example supporting GSM900 whereas the second base unit 200 supporting GSM1800 functionality. Both base units are connected in such a way that the number of antennas is not increased.
The transmitter part 120 of the first base unit 100 comprises several transmitters Tx11-Tx1N for the used frequencies within the GSM900 system. The signals of each transmitter are combined by a combiner 121 and then transferred via a diplexer DPX1 to the antenna 111. Advantageously a filter combiner is used as combiner element 121 to achieve high traffic capacity.

If an existing base unit is upgraded to a base station according to Fig.3 the antenna 112 from the former existing base unit is disconnected from the second receiver unit 150 and connected with the diplexer DPX2 of the second base unit 200. The transmitter part 220 of the second base unit 200 comprises several transmitters Tx21-Tx2N for the frequencies used within the GSM1800 system. The signals of each transmitter are combined by a combiner 221 and then transferred via a diplexer DPX2 to the antenna 112. A filter combiner is possible but a hybrid combiner is used advantageously as combiner element 221, enabling full frequency hopping capability. In this way better transmission quality and better frequency reuse in a mobile communication network can be provided while keeping the same number of antennas.

The first receiver part 130 of the first base unit 100 receives signals from the antenna 111 via the diplexer DPX1 and an amplifier LNA1. A splitter 140 is inserted in the signal path between the antenna 111 and the first receiver part 130 to extract signals of the second specification received by the antenna 111. This extracted signal is used for diversity reception of the second base unit 200. Similarly splitter 240 is disposed between the antenna 112 and the first receiver part 230 to extract signals of the first specification received by the antenna 112. The extracted signals pass filter element BP1,BP2 and additional amplifiers LNA12,LNA22. An adjusting element A1,A2 is inserted to adjust the extracted signals for further processing by the respective receiver parts. This adjustment can be performed for the gain and/or frequency and /or phase of the extracted signals. With such an arrangement several advantages are achieved. Voice channel traffic capacity is increased, the number of antennas is the same as before upgrading the first base unit 100 by a second base unit 200 and also the diversity reception is preserved.

Fig.3 shows an arrangement which has been upgraded from an existing GSM900 base unit 100 with a second base station of GSM1800 functionality with minimum hardware effort. The upgrade has been performed by disconnecting one antenna 112 from the first base unit 100 and connecting it to the second base unit 200,inserting splitters 140 and 240 in the receiving branch of each base unit, and adding two additional cables to connect the splitters with the corresponding receiver parts 150 and 250. It is obvious that the antennas 111 and 112 must be suitable for transmitting signals of at least the specification of the corresponding base unit and receiving signals of both specifications. Else the antennas have to be replaced by suitable ones, but nevertheless the number of antennas is not increased. Such an arrangement, as shown in Fig.3, to achieve high voice channel traffic capacity can be for example combinations of base units as described above as well as combinations of GSM900 and GSM450, or GSM and IS136, or GSM and NMT, or GSM and UMTS or GSM and EDGE combinations.

There is another advantage of using combinations like for example GSM and UMTS or GSM and EDGE. UMTS as well as EDGE are specified to support high data rates in comparison to GSM systems, which are developed mainly for supporting voice channel traffic. That means that the embodiments described are capable of simultaneous support of voice channel traffic and high data rate in an area.

The preferred embodiment, shown in Fig.3, can easily be used for a combination of a GSM900 and a UMTS system for supporting simultaneous voice channel traffic and high data rates. The splitter 140,240 has to be inserted before the diplexer DPX1, DPX2, if the diplexer is not able to support frequencies from both specifications. Especially if an existing base unit 100 for GSM is upgraded with a second base unit 200 for a UMTS specification the splitter 140 has to be inserted between the antenna and the diplexer DPX1 because a diplexer and an amplifier generally have a limited frequency range.

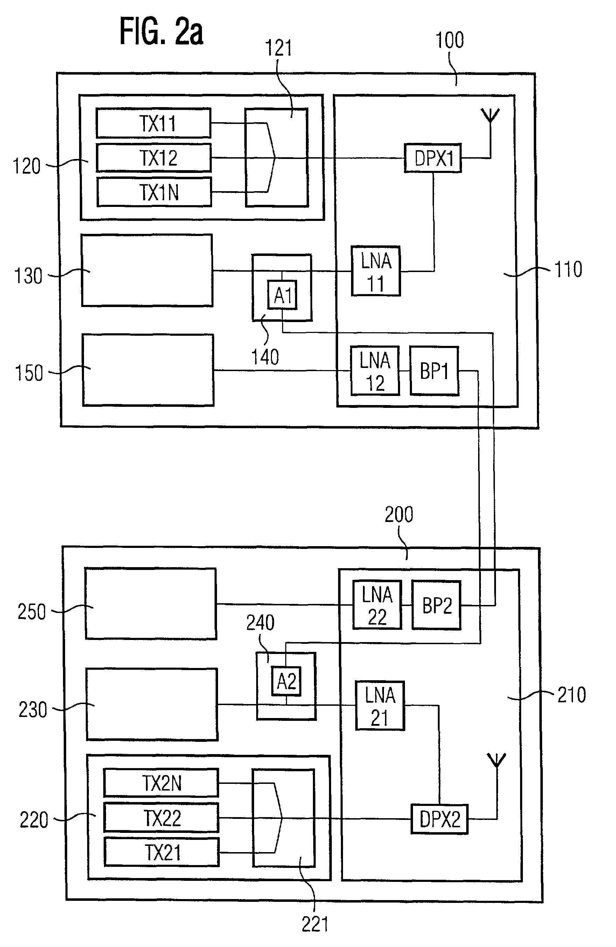

A second embodiment of the present invention is shown in Fig.2a. Here the first base unit 100 is a GSM900 system, while the second base unit 200 is an EDGE system of the same frequency band. The difference between Fig.2a and Fig. 3 is that the splitter 140,240 is arranged in such a way, that it extracts the diversity signal directly before the first receiving part 130,230 of the base unit 100,200. This is possible because both base units for supporting GSM900 and EDGE functionality use the same frequency band, and the existing elements within the receiving path can be reused. According to a preferred embodiment the first base unit 100 is a GSM900 system and has a filter combiner as combiner element 121 which allows high capacity per transmitting antenna 111 by low loss combination of the signals from the transmitters Tx11 - Tx1N. The second base unit 200 is an EDGE system and uses as combiner element 212 a hybrid combiner which allows full frequency hopping capability for signals transmitted over antenna 112 because of low signal distortion for higher modulation techniques like 8PSK or 16QAM.

The main advantage of the combination of a base unit 100 specified for GSM900 and a second base unit 200 specified for EDGE system is that the second base unit can support high data rate and/or voice channel capacity.

As described above the combiner 221 is a well known hybrid combiner. A hybrid combiner integrated in the base unit which supports the EDGE specification has the advantages that the distortion of the signals is low in comparison to a filter combiner, allowing higher data rates for given path attenuation between the transmitting base unit and an user.

The base unit for EDGE preferably allows to switch between two modulation modes, one supporting GMSK for voice channel traffic and the second supporting 8PSK mode for higher data rate traffic. In this case the combination of base units specified for GSM900 and EDGE can at one time increase the voice channel capacity if the EDGE base unit is in the GMSK modulation mode and can at a second time support simultaneously voice channel traffic and high data rate if the EDGE base unit is in the 8PSK modulation mode.

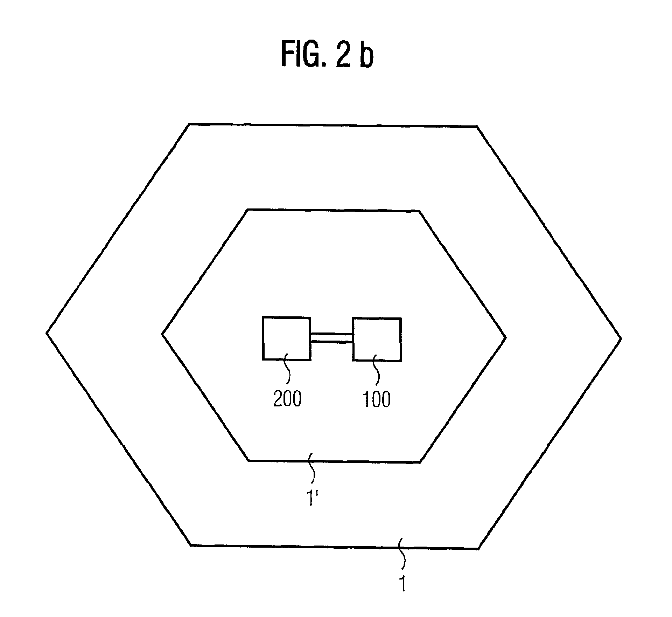

Fig. 2b shows the area covered by a combination of a first base unit specified for GSM900 and a second base unit specified for EDGE as described with respect to Fig.2a. In an inner area 1' simultaneous high data rate and high voice channel traffic is supported if the second base unit 200 is in the 8PSK modulation mode. The extensive area 1 outside of the area 1' can be covered by the second base unit only with a GMSK modulation. In this area data traffic and voice channel traffic services equal to the first base unit 100 specified for GSM can be achieved by the second base unit 200 specified for EDGE.

The invention is not restricted to the specific embodiments and examples described above. On the basis of the teaching contained in the description, various modifications and variations of the invention may be carried out by a skilled person. It is also obvious that the above explained advantages of using different combiners the base units can be used in a case where both base units correspond to the same specifications.

## Claims

1. A base station with a first and a second base unit, each base unit comprising
- an antenna system for transmitting and receiving radio signals,
- a transmitter part, for processing signals for the transmission by the antenna system,
- a first receiver part for processing signals received by the antenna system,
- a splitter for splitting signals received by the antenna system,
- a second receiver part connected to the splitter of the other base unit, for processing signals received by the antenna system of the other base unit,
- wherein the signals processed by the first receiver part and the signals processed by the second receiver part provide diversity reception,
**characterized in that**
- the transmitter part of the first base unit includes at least two transmitters for transmitting signals of a first specification and a combiner for combining the signals of the transmitters to the antenna part of the first base unit,
- and the transmitter part of the second base unit comprises a transmitter for transmitting signals of a second specification

2. Base station according to claim 1 **characterized in that**
- the transmitter part of the second base unit includes at least two transmitters and a combiner for combining the signals of the transmitters to the antenna part of the second base unit.

3. Base station according to claim 2 **characterized in that**
- the combiner of the first base unit is of a different type as the combiner of the second base unit.

4. Base station according to any of the above claims **characterized in that**
- the combiner of a base unit is a filter combiner.

5. Base station according to any of the claims 1-3 **characterized in that**
- the combiner of a base unit is a hybrid combiner.

6. Base station according to any of the claims 2-4 **characterized in that**
- the combiner of the first base unit is a hybrid combiner and
- the combiner of the second base unit is a filter combiner.

7. Base station according to any of the preceding claims **characterized in that**
- the first base unit complies to the EDGE specification and the second base unit complies to the GSM specification.
